# EUROPEAN PATENT APPLICATION

(11) **EP 4 231 260 A1**
(43) Date of publication of application: **23.08.2023**
(21) Application number: 22200539.9
(22) Date of filing: 10.10.2022
(51) Int. Cl.: G07G 1/00, G07G 1/14, G07G 3/00, G06V 20/52, G06V 40/20, G06Q 20/18, G06Q 20/20, G06Q 30/0207

(54) **DISTRIBUTION PROGRAM, DISTRIBUTION METHOD, AND INFORMATION PROCESSING APPARATUS**

(30) Priority: 21.02.2022 JP 2022025131
(71) Applicant: FUJITSU LIMITED, Kawasaki-shi, Kanagawa 211-8588 (JP)
(72) Inventor: Ikai, Yoshiaki, Kawasaki-shi, Kanagawa, 211-8588 (JP); Jo, Yuka, Kawasaki-shi, Kanagawa, 211-8588 (JP)
(74) Representative: Hoffmann Eitle

(57) **Abstract**

A distribution program causes a computer to execute a process including extracting a video of a first area in a store, the video including a person and a product, identifying, by inputting the video of a first area in a store into a trained machine learning model, a behavior that is performed by the person with respect to the product in the store, identifying a first behavior type that is led by the behavior that is performed by the person with respect to the product among a plurality of behavior types that define transition of a process of the behavior for a product in the store, identifying a payment machine which the person uses from a video of a second area including the payment machine in the store and when the identified first behavior type is at a predetermined level or higher and the product indicating the first behavior type is not included in products registered at the identified payment machine, distributing information corresponding to the product indicating the first behavior type to the identified payment machine.

## Description

### FIELD

The embodiment discussed herein is related to a distribution program and the like.

### BACKGROUND

Marketing is performed to stimulate purchase intention of users and promote sales of products by distributing coupons (vouchers). For example, in the conventional technology, a technique of identifying a product related to a certain product that has been purchased by a user in the past and providing a coupon for the identified product when the user performs payment at a cash register is disclosed.

In addition, in online shops, a coupon is individually issued for each of users and advertising is also provided on the basis of an access history or a search history.

Patent Literature 1: Japanese Laid-open Patent Publication No. 2006-252160

However, in the conventional technology as described above, it is difficult to provide information on a product that attracts interest of a user and that is not yet purchased by the user.

For example, if it is possible to issue information related to a product for which the user is wondering whether to purchase, it becomes possible to more effectively stimulate purchase intention of the user.

In contrast, in the conventional technology, it is only possible to issue a coupon related to a product that has already been purchased by the user in the past, and it is difficult to issue a coupon for a product that is not yet purchased by the user.

Accordingly, it is an object in one aspect of an embodiment of the present invention to provide a distribution program, a distribution method, and an information processing apparatus capable of providing information related to a product that attracts interest of a user and that is not yet purchased by the user.

### SUMMARY

According to an aspect of an embodiment, a distribution program causes a computer to execute a process, including, extracting a video of a first area in a store, the video including a person and a product; identifying, by inputting the video of a first area in a store into a trained machine learning model, a behavior that is performed by the person with respect to the product in the store; identifying a first behavior type that is led by the behavior that is performed by the person with respect to the product among a plurality of behavior types that define transition of a process of the behavior for a product in the store; identifying a payment machine which the person uses from a video of a second area including the payment machine in the store; and when the identified first behavior type is at a predetermined level or higher and the product indicating the first behavior type is not included in products registered at the identified payment machine, distributing information corresponding to the product indicating the first behavior type to the identified payment machine.

### BRIEF DESCRIPTION OF DRAWINGS

FIG. 1 is a diagram illustrating an example of a system according to the present embodiment;
FIG. 2 is a functional block diagram illustrating a configuration of an information processing apparatus according to the present embodiment;
FIG. 3 is a diagram illustrating an example of a data structure of a behavior rule database (DB);
FIG. 4 is a diagram illustrating an example of a recognition rule;
FIG. 5 is a diagram illustrating an example of a data structure of a camera installation DB;
FIG. 6 is a diagram illustrating an example of a data structure of a product DB;
FIG. 7 is a diagram illustrating an example of a data structure of a person DB;
FIG. 8 is a diagram for explaining user tracking;
FIG. 9 is a diagram illustrating an example of extraction and tracking of a user;
FIG. 10 is a diagram illustrating an example of skeleton information;
FIG. 11 is a diagram for explaining determination of a posture of a whole body;
FIG. 12 is a diagram for explaining detection of a motion of each of parts;
FIG. 13 is a diagram illustrating an example of designation of an ROI according to the embodiment;
FIG. 14 is a diagram for explaining an example of a process performed by a motion recognition unit according to the embodiment;
FIG. 15 is a diagram illustrating an example of a purchase psychological process;
FIG. 16 is a diagram for explaining identification of a resultant behavior type according to the embodiment;
FIG. 17 is a flowchart illustrating the flow of a process performed by the information processing apparatus according to the embodiment;
FIG. 18 is a flowchart illustrating the flow of a distribution process; and
FIG. 19 is a diagram illustrating an example of a hardware configuration of a computer that implements the same functions as those of the information processing apparatus of the embodiment.

### DESCRIPTION OF EMBODIMENT(S)

Preferred embodiments of the present invention will be explained with reference to accompanying drawings. The present invention is not limited by the embodiments below.

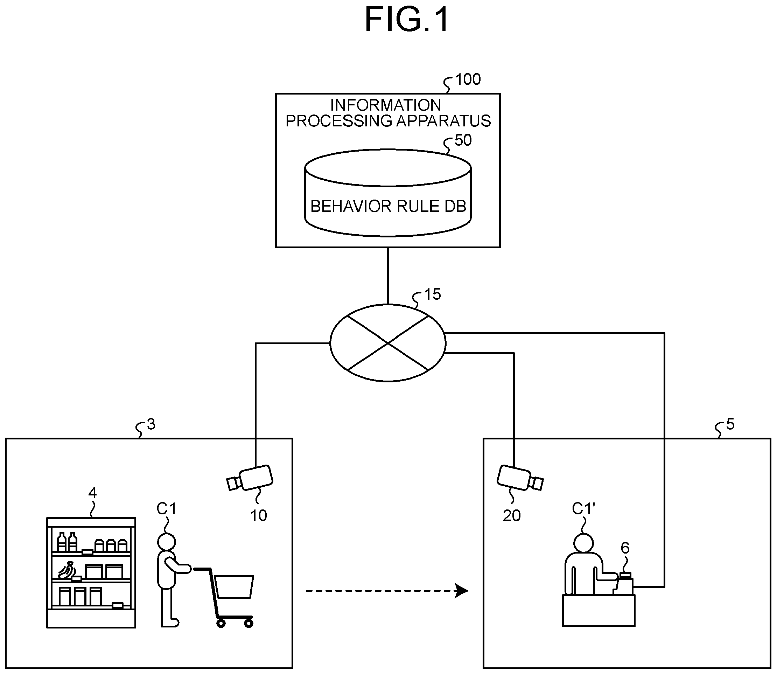

FIG. 1 is a diagram illustrating an example of a system according to the embodiment. As illustrated in FIG. 1, the system according to the embodiment includes cameras 10 and 20 and an information processing apparatus 100. The camera 10, the camera 20, and the information processing apparatus 100 are connected to one another via a network 15.

The camera 10 is a camera that captures a video of a sales floor 3. A shelf 4 for storing products is installed in the sales floor 3. While the shelf 4 is illustrated in FIG. 1, other shelves may be installed in the sales floor 3 and the products need not always be stored in any of the shelves. It may be possible to install a plurality of cameras in addition to the camera 10 in the sales floor 3. The camera 10 transmits information on the captured video to the information processing apparatus 100. In the following descriptions, the information on the video captured by the camera 10 will be referred to as "first video information".

For example, when a user C1 takes a product from the shelf 4, puts the product in a shopping cart or the like, and performs payment for the product, the user C1 moves to a cashier area 5.

The camera 20 is a camera that captures a video of the cashier area 5. A cash register 6 at which a user C1' performs payment is installed in the cashier area 5. While the cash register 6 is illustrated in FIG. 1, other cash registers may be installed in the cashier area 5. It may be possible to install a plurality of cameras in addition to the camera 20 in the cashier area 5. The camera 20 transmits information on the captured video to the information processing apparatus 100. In the following descriptions, the information on the video captured by the camera 20 will be referred to as "second video information".

The cash register 6 is connected to the network 15, and transmits purchase history information on the user C1' to the information processing apparatus 100. The purchase history information includes information on a product that is purchased by the user C1'. Meanwhile, the information processing apparatus 100 may analyze the second video information and identify the information on the product that is purchased by the user C1'.

The information processing apparatus 100 includes a behavior rule database (DB) 50 in which transition of a process of a behavior and a behavior type are defined. Examples of the behavior include "carrying a shopping cart", "looking at a product for a predetermined time or longer", and "a foot is located in a place in front of a shelf of a product". Examples of the behavior type include "pick up a product and put the product into a cart", "not purchased after consideration of whether to purchase a product", "stay in front of a product", "extend a hand to a plurality of products", and "pass by in front of a product".

The information processing apparatus 100 tracks the user C1 on the basis of the first video information, and identifies a behavior that is performed by the user C1 with respect to a product in the sales floor 3. The information processing apparatus 100 identifies a first behavior type that is led by each of behaviors of the user among a plurality of behavior types, on the basis of each of the behaviors performed by the user C1 identified from the first video information and the behavior rule DB 50. Furthermore, the information processing apparatus 100 identifies a product as a target for the first behavior type on the basis of the first video information.

The information processing apparatus 100 extracts a personal feature of the user C1 on the basis of the first video information. The information processing apparatus 100 identifies the cash register 6 that is used by the user C1' who has the same personal feature as the user C1 on the basis of the second video information, and receives the purchase history information on the user C1' from the cash register 6. Meanwhile, the information processing apparatus 100 may analyze the video information received from the camera 10, the camera 20, and a different camera, tracks the user C1 who moves from the sales floor 3 to the cashier area 5, and identify the cash register 6 that is used by the user C1 (the user C1').

If the first behavior type is a behavior type with a predetermined level or higher and the product as the target for the first behavior type is not included in the purchase history information, the information processing apparatus 100 distributes a coupon or information related to advertising, such as an advertisement, to the user C1'. For example, the information processing apparatus 100 may cause the cash register 6 to output a coupon, or display an advertisement on a display screen of the cash register 6. Furthermore, it may be possible to distribute information on a coupon or an advertisement in cooperation with an application that is set in a terminal device carried by the user C1'. Hereinafter, the application may be referred to as an "app". It may be possible to transmit an e-mail related to a product advertisement to the terminal device of the user C1' on the basis of registration information on the user C1'. Meanwhile, the coupon may be a discount ticket or a complimentary ticket for a product, and may be usable when the user visits the store next time or later. The advertisement is information that lets a large number of persons in the world know information on a product, generates interest in the product, and urges the persons to take action, such as purchase. In this case, it is possible to change contents of the advertisement depending on the first behavior type that is led by each of the behaviors of the user.

Here, it is assumed that the behavior type with the predetermined level or higher is a behavior type corresponding to an interest, a request, and a comparison with respect to a product. For example, examples of the behavior type with the predetermined level or higher include "not purchased after consideration of whether to purchase a product", "stay in front of a product", and "extend a hand to a plurality of products".

As described above, the information processing apparatus 100 according to the present embodiment identifies the first behavior type of the user C1 on the basis of the first video information, and distributes a coupon if the first behavior type is the behavior type with the predetermined level or higher and a product corresponding to the first behavior type is not purchased. With this configuration, it is possible to provide a coupon for a product that may attract interest of the user and that is not yet purchased by the user.

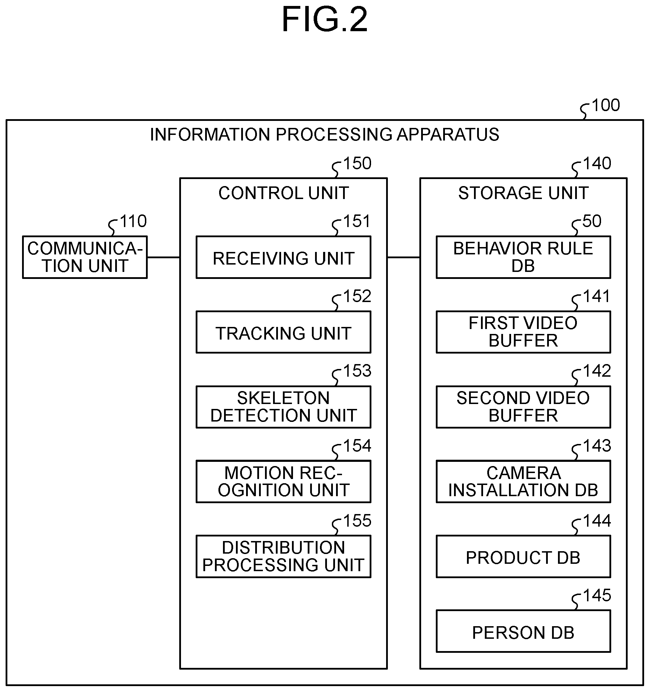

A configuration example of the information processing apparatus 100 according to the present embodiment will be described below. FIG. 2 is a functional block diagram illustrating a configuration of the information processing apparatus according to the present embodiment. As illustrated in FIG. 2, the information processing apparatus 100 includes a communication unit 110, a storage unit 140, and a control unit 150. The information processing apparatus 100 may be connected to an input device and a display device, although illustration is omitted.

The communication unit 110 performs data communication with the camera 10 (a plurality of cameras installed in the sales floor 3), the camera 20 (a plurality of cameras installed in the cashier area 5), the cash register 6 (a plurality of cash registers), other apparatuses, and the like via the network 15. Further, the communication unit 110 may receive pieces of video information from a plurality of cameras that are installed at an entrance and an exit of the store. The communication unit 110 is implemented by a network interface card (NIC) or the like.

The storage unit 140 includes the behavior rule DB 50, a first video buffer 141, a second video buffer 142, a camera installation DB 143, a product DB 144 and a person DB 145. The storage unit 140 is implemented by, for example, a semiconductor memory device, such as a flash memory, or a storage device, such as a hard disk or an optical disk.

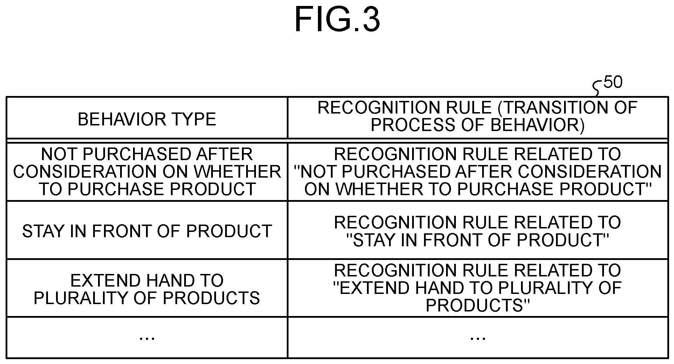

The behavior rule DB 50 stores therein information that defines a relationship between a recognition rule and a behavior type. FIG. 3 is a diagram illustrating an example of a data structure of the behavior rule DB. As illustrated in FIG. 3, the behavior rule DB 50 associates the behavior type and the recognition rule with each other. For example, behavior types of "not purchased after consideration of whether to purchase a product", "stay in front of a product", "extend a hand to a plurality of products", and the like are set in the behavior type. The recognition rule indicates a transition of processes of a plurality of behaviors or the like.

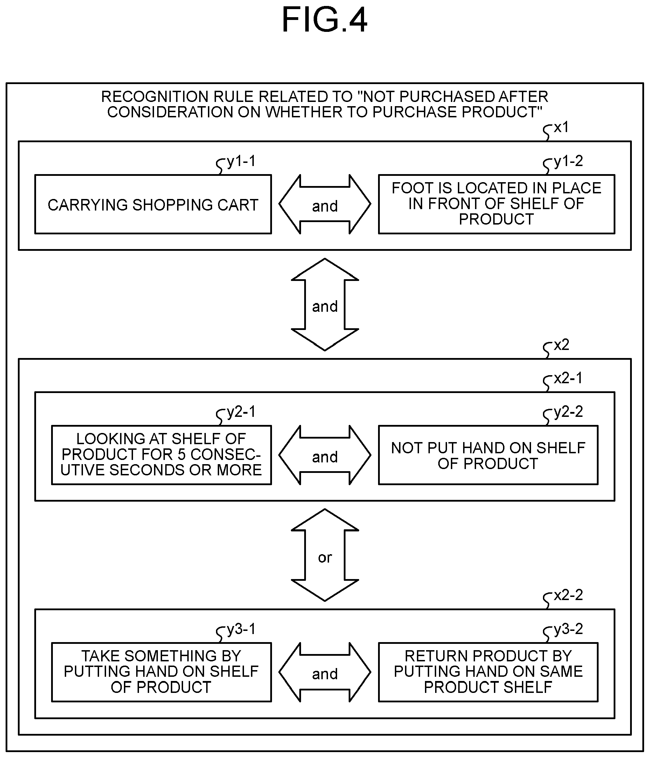

FIG. 4 is a diagram illustrating an example of the recognition rule. As one example, a recognition rule corresponding to the behavior type of "not purchased after consideration of whether to purchase a product" will be described below. For example, if the behavior of the user meets a condition x1 and a condition x2, it is recognized that the behavior type of the user is "not purchased after consideration of whether to purchase a product".

The condition x1 is satisfied if the behavior of the user meets a behavior y1-1 and a behavior y1-2. The behavior y1-1 is "carrying a shopping cart". The behavior y1-2 is "a foot is located in a place in front of a shelf of a product".

The condition x2 is satisfied if one of a condition x2-1 and a condition x2-2 is satisfied.

The condition x2-1 is satisfied if the behavior of the user meets a behavior y2-1 and a behavior y2-2. The behavior y2-1 is "looking at a shelf of a product for 5 consecutive seconds or more". The behavior y2-2 is "not put a hand on a shelf of a product".

The condition x2-2 is satisfied if the behavior of the user meets a behavior y3-1 and a behavior y3-2. The behavior y3-1 is "take something by putting a hand on a shelf of a product". The behavior y3-2 is "return a product by putting hand on the same product shelf".

Referring back to explanation of FIG. 2, the first video buffer 141 is a buffer for storing the first video information that is received from the camera 10 (a plurality of cameras) in the sales floor 3.

The second video buffer 142 is a buffer for storing the second video information that is received from the camera 20 (a plurality of cameras) in the cashier area 5.

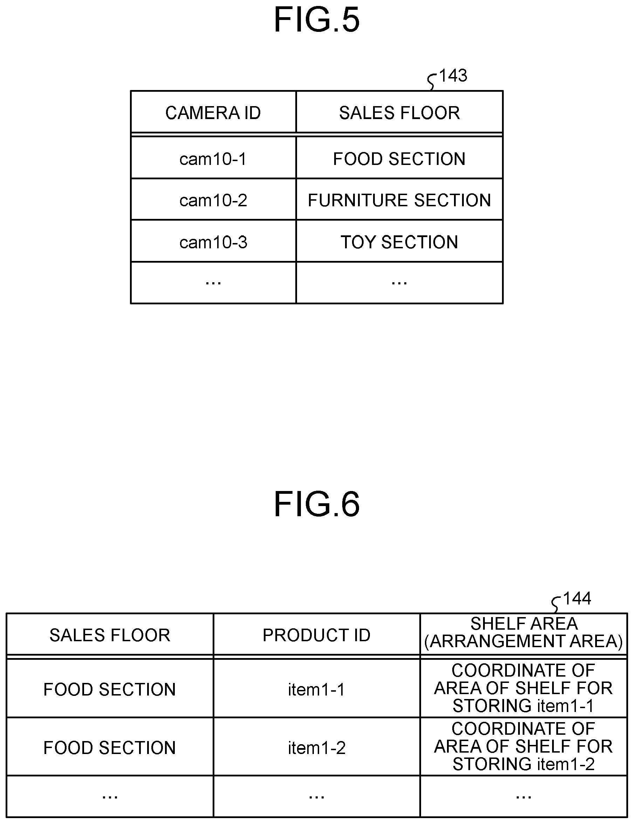

The camera installation DB 143 stores therein information for identifying a place in which the camera 10 is installed in the sales floor 3. The information stored herein is set in advance by an administrator or the like. FIG. 5 is a diagram illustrating an example of a data structure of the camera installation DB. As illustrated in FIG. 5, the camera installation DB 143 associates a camera ID and a sales floor with each other. The camera ID is information for uniquely identifying a camera. Information for identifying a sales floor is set in the sales floor. For example, if it is assumed that the camera 10 is assigned with a camera ID of "cam10-1", it is indicated that the camera 10 is installed in a "food section".

The product DB 144 stores therein information on a product that is provided in each of sales floors. The information stored herein is set in advance by an administrator or the like. FIG. 6 is a diagram illustrating an example of a data structure of the product DB. As illustrated in FIG. 6, the product DB 144 associates a sales floor, a product ID, and a shelf area with one another. Information for identifying a sales floor is set in the sales floor. The product ID is information for uniquely identifying a product. A coordinate of an area of a shelf storing the product identified by the product ID is set in the shelf area. It is assumed that the coordinate of the shelf area is a coordinate in the video information captured by a camera that is installed in a corresponding sales floor. If a product is not stored in a shelf, a coordinate of an arrangement area of the product that is identified by the product ID is set instead of the shelf area. Furthermore, it may be possible to register a coordinate of an area in which the user stands when the user extends a hand to a product on the shelf, in association with the coordinate of the shelf area.

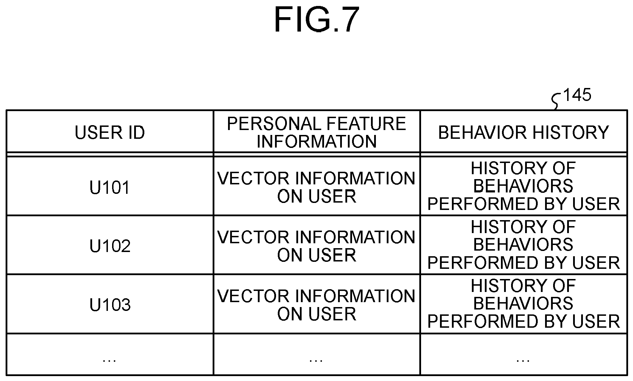

The person DB 145 stores therein various kinds of information on a user who stays in the store. FIG. 7 is a diagram illustrating an example of a data structure of the person DB. As illustrated in FIG. 7, the person DB 145 associates a user ID, personal feature information, and a behavior history with one another. The user ID is information for uniquely identifying a user in the store, and is dynamically assigned to a user who is extracted from the first video information or the second video information. The personal feature information is 512-order vector information that is obtained by Person Re-Identification or the like. A history of behaviors performed by a tracked person is set in the behavior history.

Meanwhile, the above-described information stored in the storage unit 140 is one example, and it is possible to store various kinds of information other than the above-described information in the storage unit 140.

Referring back to explanation of FIG. 2, the control unit 150 includes a receiving unit 151, a tracking unit 152, a skeleton detection unit 153, a motion recognition unit 154, and a distribution processing unit 155. The control unit 150 is implemented by by a central processing unit (CPU) or a micro processing unit (MPU). Further, the control unit 150 may be implemented by, for example, an integrated circuit, such as an application specific integrated circuit (ASIC) or a field programmable gate array (FPGA).

The receiving unit 151 receives the first video information from the camera 10 (a plurality of cameras) installed in the sales floor 3. The receiving unit 151 stores the received first video information in the first video buffer 141. The receiving unit 151 stores the first video information for each of cameras in each of the sales floors. The first video information includes chronological frames (still image information).

The receiving unit 151 receives the second video information from the camera 20 (a plurality of cameras) installed in the cashier area 5. The receiving unit 151 stores the received second video information in the second video buffer 142. The receiving unit 151 stores the second video information for each of cameras in the cashier area 5. The second video information includes chronological frames.

The tracking unit 152 extracts frames in which users appear from among a plurality of frames that are stored in the first video buffer 141 and the second video buffer 142, and identifies the same person among the frames.

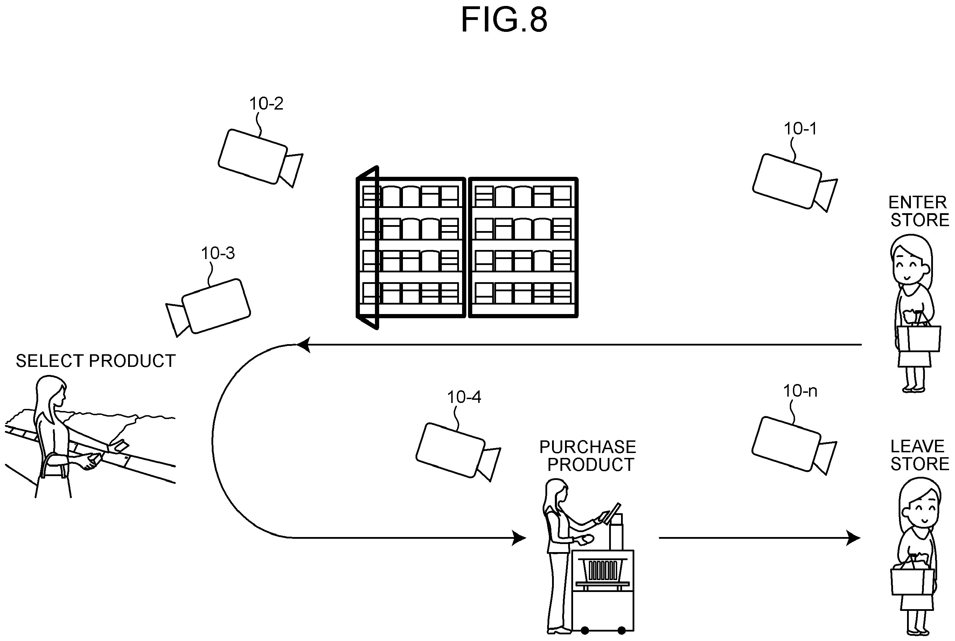

For example, the tracking unit 152 tracks a certain user since entrance into the store until leave from the store, and acquires each of frames of the certain user who is captured in the store. FIG. 8 is a diagram for explaining user tracking. As illustrated in FIG. 8, the tracking unit 152 extracts users from a plurality of frames captured by cameras that are installed in various places, such as an entrance of the store, each of sales floors, a cashier area, and an exit of the store, in the store, identifies the same user from among the extracted users, and tracks each of the users. In FIG. 8, a plurality of cameras are represented by cameras 10-1, 10-2, 10-3, 10-4, ... 10-n for the sake of convenience.

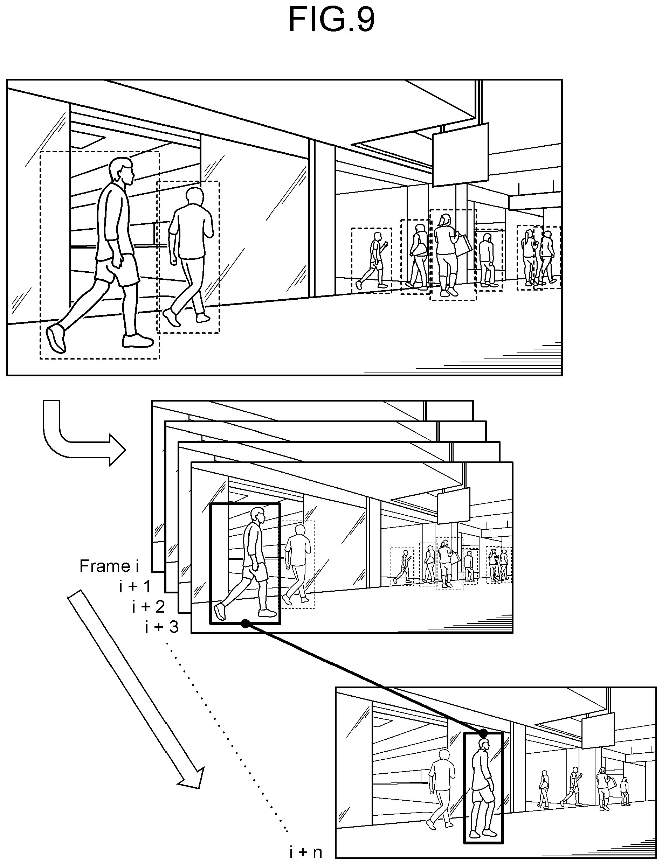

FIG. 9 is a diagram illustrating an example of extraction and tracking of a user. As illustrated in FIG. 9, the tracking unit 152 extracts a user from an in-store image by using an existing detection algorithm, such as YOU Only Look Once (YOLO), Single Shot Multibox Detector (SSD), or Region Based Convolutional Neural Networks (RCNN), for example. The in-store image is a frame included in the first video information captured by the camera 10, and, as illustrated in FIG. 9, the extracted user is indicated by a bounding box (BBOX) that is a rectangle surrounding a corresponding area in the frame.

Furthermore, as illustrated in an upper part in FIG. 9, it is naturally possible to extract a plurality of users from the in-store image. Therefore, as illustrated in a lower part in FIG. 9, the tracking unit 152 identifies the same person among the frames on the basis of a similarity of the BBOX of the user among the plurality of frames, for example. To identify the same person, an existing tracking algorithm, such as Tracking Learning Detection (TLD) or Kernelized Correlation Filters (KCF), may be used, for example.

The tracking unit 152 assigns a user ID to the same user, and registers the user ID in association with the personal feature information on the user in the person DB 145. The personal feature information is 512-order vector information that is obtained by Person Re-Identification or the like. The tracking unit 152 may extract, as the personal feature information, a color of clothes, a height, the way of carrying a bag, the way of walking, or the like of a user included in the BBOX.

The skeleton detection unit 153 acquires skeleton information on a user who appears in a frame. Specifically, the skeleton detection unit 153 performs skeleton detection on a user with respect to frames in which each of the users extracted by the tracking unit 152 appear. The skeleton detection unit 153 adds the ID of the user who appears in the frames to the skeleton information.

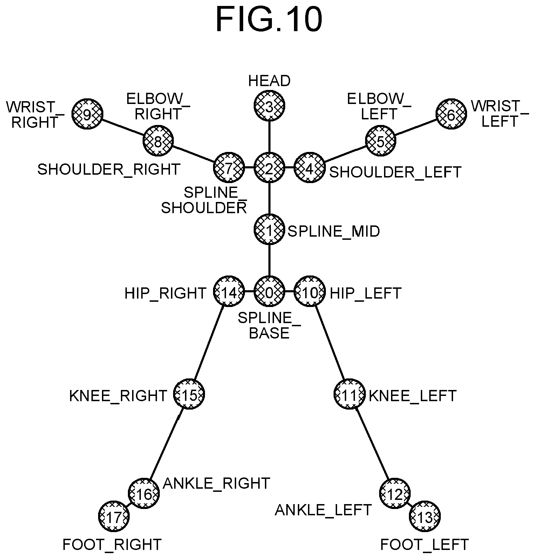

For example, the skeleton detection unit 153 acquires the skeleton information by inputting image data of the extracted user, that is, the BBOX image representing the extracted user, to a trained machine learning model that is constructed by using an existing algorithm, such as DeepPose or OpenPose. FIG. 10 is a diagram illustrating an example of the skeleton information. As the skeleton information, 18 pieces of definition information (with the numbers 0 to 17) in each of which a joint identified by a well-known skeleton model is assigned with a number may be used. For example, a right shoulder joint (SHOULDER_RIGHT) is assigned with the number 8, a left elbow joint (ELBOW_LEFT) is assigned with the number 5, a left knee joint (KNEE_LEFT) is assigned with the number 11, and a right hip joint (HIP_RIGHT) is assigned with the number 14. Therefore, it is possible to acquire coordinate information on 18 skeletons as illustrated in FIG. 10 from the image data, and, for example, "X coordinate = X7, Y coordinate = Y7, and Z coordinate = Z7" is acquired as a position of the right shoulder joint with the number 7. Meanwhile, for example, the Z axis may be defined as a distance direction from the imaging apparatus to a target, the Y axis may be defined as a height direction perpendicular to the Z axis, and the X axis may be defined as a horizontal direction.

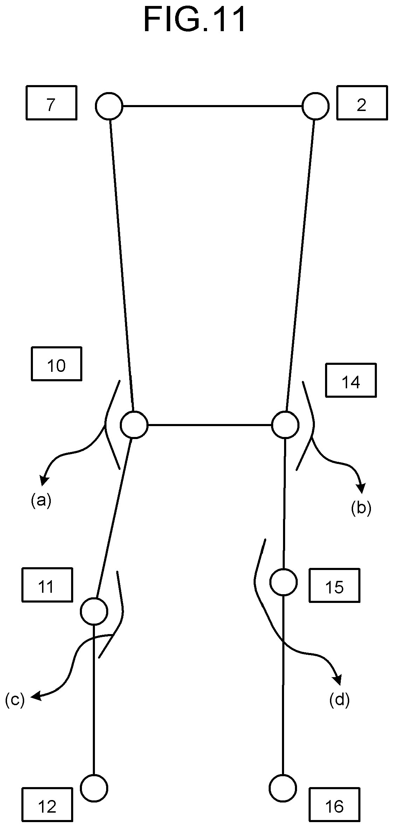

Furthermore, the skeleton detection unit 153 may determine a posture of the whole body, such as standing, walking, squatting, sitting, or sleeping, by using a machine learning model that is trained for skeleton patterns in advance. For example, the skeleton detection unit 153 may be able to determine the closest posture of the whole body by using a machine learning model that is trained by using Multilayer Perceptron for an angle between some joints in the skeleton information as illustrated in FIG. 10. FIG. 11 is a diagram for explaining determination of a posture of the whole body. As illustrated in FIG. 11, the skeleton detection unit 153 is able to detect the posture of the whole body by acquiring an angle (a) between a joint of "HIP_LEFT" with the number 10 and a joint of "KNEE_LEFT" with the number 11, an angle (b) between a joint of "HIP_RIGHT" with the number 14 and a joint of "KNEE_RIGHT" with the number 15, an angle of a joint of "KNEE_LEFT" with the number 11, and an angle (d) of a joint of "KNEE_RIGHT" with the number 15.

Furthermore, the skeleton detection unit 153 is able to detect a motion of each of parts by determining a posture of the part on the basis of a three-dimensional (3D) joint posture of the body. Specifically, the skeleton detection unit 153 is able to convert a two-dimensional (2D) joint coordinate to a 3D joint coordinate by using an existing algorithm, such as a 3D-baseline method.

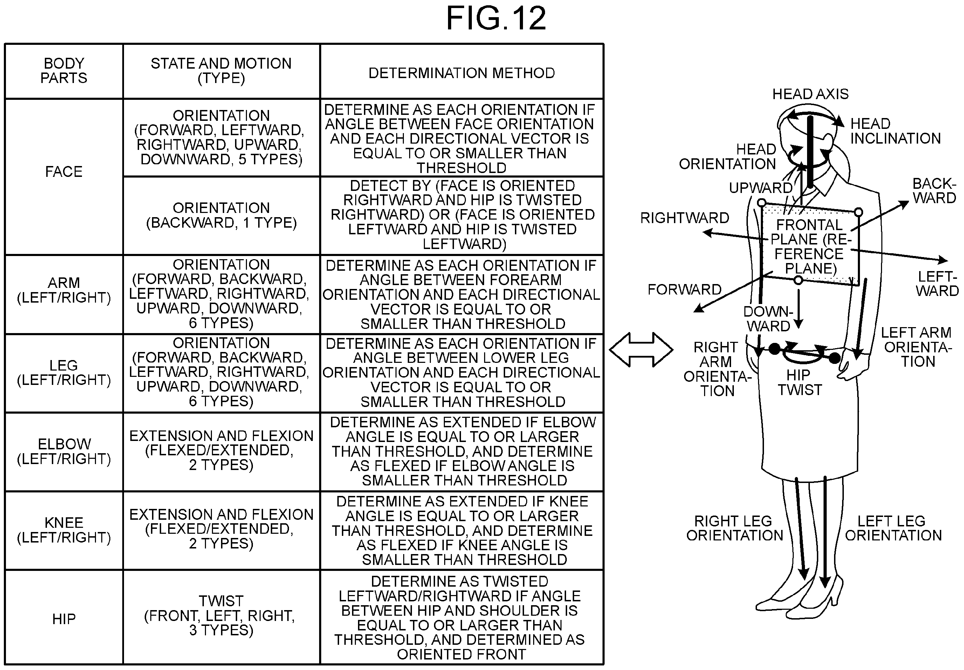

FIG. 12 is a diagram for explaining detection of a motion of each of the parts. As illustrated in FIG. 12, the skeleton detection unit 153 is able to detect, with respect to a part "face", whether the face is oriented forward, leftward, rightward, upward, or downward (five types), by determining whether an angle between a face orientation and each directional vector is equal to or smaller than a threshold. Meanwhile, the skeleton detection unit 153 identifies the face orientation by a vector that is defined such that "a start point is a midpoint between both ears and an end point is a nose". Furthermore, the skeleton detection unit 153 is able to detect whether the face is oriented backward by determining whether "the face is oriented rightward and a hip is twisted rightward" or "the face is oriented leftward and the hip is twisted leftward".

With respect to a part "arm", the skeleton detection unit 153 is able to detect whether left and right arms are oriented in any direction among forward, backward, leftward, rightward, upward, and downward directions (six types) by determining whether an angle between forearm orientation and each directional vector is equal to or smaller than a threshold. Meanwhile, the skeleton detection unit 153 is able to detect the arm orientation by a vector that is defined such that "a start point is an elbow and an end point is a wrist".

With respect to a part "leg", the skeleton detection unit 153 is able to detect whether left and right legs are oriented in any direction among forward, backward, leftward, rightward, upward, and downward directions (six types) by determining whether an angle between a lower leg orientation and each directional vector is equal to or smaller than a threshold. Meanwhile, the skeleton detection unit 153 is able to detect the lower leg orientation by a vector that is defined such that "a start point is a knee and an end point is an ankle".

With respect to a part "elbow", the skeleton detection unit 153 is able to detect that the elbow is extended if an angle of the elbow is equal to or larger than a threshold and the elbow is flexed if the angle is smaller than the threshold (two types). Meanwhile, the skeleton detection unit 153 is able to detect the angle of the elbow by an angle between a vector A that is defined such that "a start point is an elbow and an end point is a shoulder" and a vector B that is defined such that "a start point is an elbow and an end point is a wrist".

With respect to a part "knee", the skeleton detection unit 153 is able to detect that the knee is extended if an angle of the knee is equal to or larger than a threshold and the knee is flexed if the angle is smaller than the threshold (two types). Meanwhile, the skeleton detection unit 153 is able to detect the angle of the knee by an angle between a vector A that is defined such that "a start point is a knee and an end point is an ankle" and a vector B that is defined such that "a start point is a knee and an end point is a hip".

With respect to a part "hip", the skeleton detection unit 153 is able to detect left twist and right twist (two types) by determining whether an angle between the hip and the shoulder is equal to or smaller than a threshold, and is able to detect that the hip is oriented forward if the angle is smaller than the threshold. Meanwhile, the skeleton detection unit 153 is able to detect the angle between the hip and the shoulder from a rotation angle about an axial vector C that is defined such that "a start point is a midpoint of both hips and an end point is a midpoint of both shoulders", with respect to each of a vector A that is defined such that "a start point is a left shoulder and an end point is a right shoulder" and a vector B that is defined such that "a start point is a left hip (hip (L)) and an end point is a right hip (hip (R))".

Referring back to explanation of FIG. 2, the motion recognition unit 154 is a processing unit that recognizes a motion of the user on the basis of a detection result of the skeleton information obtained by the skeleton detection unit 153. Specifically, the motion recognition unit 154 identifies a behavior including at least one motion on the basis of transition of skeleton information that is recognized for each of successive frames. The motion recognition unit 154 registers each of the behaviors identified from the skeleton information in the person DB 145 in association with the user ID that is added to the skeleton information.

For example, if a skeleton representing a face looking at the front is continuously detected by determination of each of the parts and a skeleton representing standing is continuously detected by determination on the posture of the whole body among several frames, the motion recognition unit 154 recognizes a motion of "looking at the front for a certain time". Further, if a skeleton in which a change of the posture of the whole body is smaller than a predetermined value is continuously detected among several frames, the motion recognition unit 154 recognizes a motion of "not moved".

Furthermore, if a skeleton in which the angle of the elbow is changed by a predetermined threshold or more is detected among several frames, the motion recognition unit 154 recognizes a motion of "moving one hand ", and, if a skeleton in which the angle of the elbow is changed by the threshold or more and thereafter the angle reaches less than the threshold is detected among several frames, the motion recognition unit 154 recognizes a motion of "flexing one hand". Moreover, if a skeleton in which the angle of the elbow is changed by the threshold or more and thereafter the angle reaches less than the threshold is detected, and thereafter, the angle is continued among several frames, the motion recognition unit 154 recognizes a motion of "looking at one hand".

Furthermore, if a skeleton in which an angle of a wrist is continuously changed is detected among several frames, the motion recognition unit 24 recognizes a motion of "frequently moving the coordinate of the wrist during a certain time period". If a skeleton in which the angle of the wrist is continuously changed and the angle of the elbow is continuously changed is detected among several frames, the motion recognition unit 154 recognizes a motion of "frequently changing the coordinate of the elbow and the coordinate of the wrist during a certain time period". If a skeleton in which the angle of the wrist, the angle of the elbow, and the orientation of the whole body are continuously changed is detected among several frames, the motion recognition unit 154 recognizes a motion of "frequently moving the body orientation and whole body motion during a certain time period".

Moreover, the motion recognition unit 154 identifies a product and a sales floor in image data in which a user, a product, and a sales floor of the product appear, from an imaging area of each of the cameras 10 and the coordinates of each of products in the imaging area and a sales floor of each of the products.

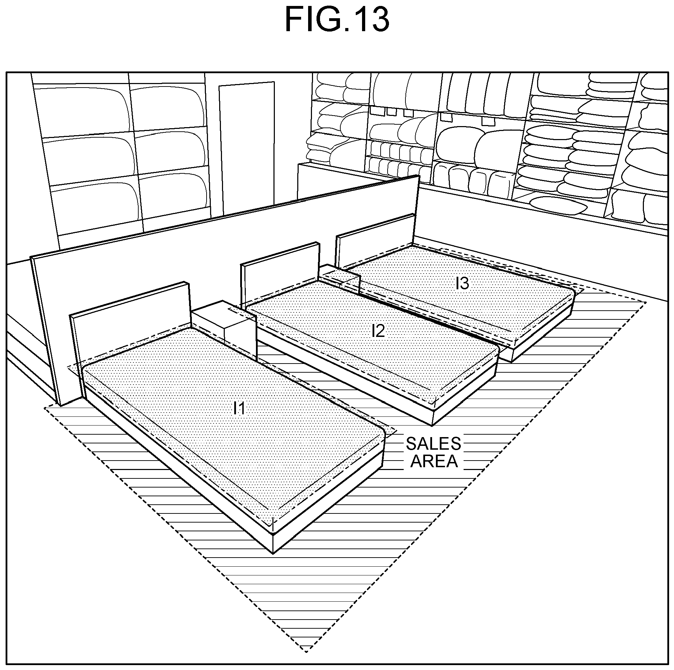

FIG. 13 is a diagram illustrating an example of designation of an ROI according to the first embodiment. As illustrated in FIG. 13, by designating, in advance, a region (region of interest: ROI) of each of products and a sales floor in the imaging area of the camera 10, the motion recognition unit 154 is able to identify the products and the sales floor from the frames of the first video information. Further, the motion recognition unit 154 is able to identify a purchase behavior of the tracked user, such as entrance into the sales floor, stay in the floor, extension of a hand to a product I1, or sitting/sleeping on a product 13, from a correlation between the ROI in each piece of image data and a behavior of the tracked user.

Furthermore, the motion recognition unit 154 identifies a first behavior type that is led by behaviors of the tracked user among a plurality of behavior types that define transition of a process of a behavior from entrance into the store until purchase of a product in the store. The motion recognition unit 154 outputs a motion recognition result, in which the identified first behavior type, the product ID of the product corresponding to the first behavior type, and the user ID of the tracked user are associated with one another, to the distribution processing unit 155.

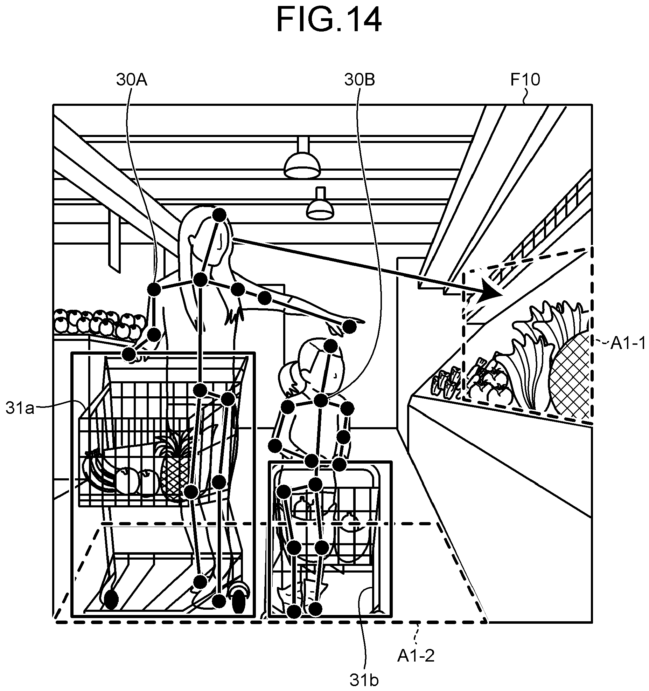

FIG. 14 is a diagram for explaining an example of a process performed by the motion recognition unit according to the present embodiment. For example, the motion recognition unit 154 sets an area A1-1 of a shelf and an area A1-2 in front of the shelf in a frame (the first video information) F10 that is captured by the camera 10, on the basis of the product DB 144. Further, pieces of skeleton information 30A and 30B that are detected by the skeleton detection unit 153 are set in the frame F10. For example, it is assumed that a product with a product ID of "item1-1" is arranged in the shelf in the frame F10.

The motion recognition unit 154 identifies that feet are located in a place in front of the shelf of the product with the product ID of "item1-1" by comparing positions indicated by the pieces of skeleton information 30A and 30B included in the frame F10 and the area A1-2 in front of the shelf. Further, the motion recognition unit 154 recognizes that users corresponding to the pieces of skeleton information 30A and 30B are carrying shopping carts 31a and 31b on the basis of an object recognition technology. The motion recognition unit 154 may use, as the object recognition technology, a technology disclosed in "S. Wang, K.-H. Yap, J. Yuan and Y. -P. Tan, "Discovering Human Interactions With Novel Objects via Zero-Shot Learning," 2020 IEEE/CVF Conference on Computer Vision and Pattern Recognition (CVPR), 2020, pp. 11649-11658, doi: 10.1109/CVPR42600.2020.01167." or the like.

Furthermore, it is assumed that the motion recognition unit 154 analyzes transition of the pieces of skeleton information 30A and 30B through the posture determination as described above, and recognizes that "the user looks at the area A1-1 of the shelf for 5 consecutive seconds or more" and "not put hand in the area A1-1 of the shelf". In this case, the motion recognition unit 154 identifies the first behavior type of "not purchased after consideration of whether to purchase a product" among a plurality of behavior types that define transition of a process of a behavior of the user until purchase of a product in the behavior rule DB 50. The motion recognition unit 154 identifies the product ID of "item1-1" that corresponds to the first behavior type of "not purchased after consideration of whether to purchase a product".

Meanwhile, the process performed by the motion recognition unit 154 to identify the first behavior type that is led by the behaviors of the tracked user is not limited to the process as described above. For example, the motion recognition unit 154 may identify the first behavior type that is led by the behaviors of the tracked user on the basis of a purchase psychological process or the like (to be described later).

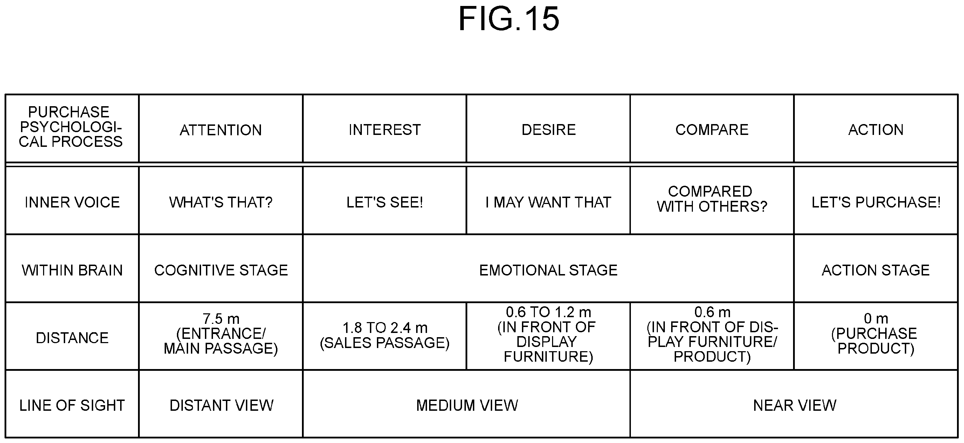

FIG. 15 is a diagram illustrating an example of a purchase psychological process. FIG. 15 illustrates a table that summarizes a customer's purchase psychological process that is what is called AIDeCA. Explanation will be given with a specific example. For example, if a customer A visits a store and finds a banner or a poster in a sales floor, the purchase psychological process transitions to "Attention". Then, if the customer A finds a poster that introduces a product X that the customer A likes, the purchase psychological process transitions to "Interest". Further, the customer A promptly picks up the product X and checks details and a price of the product X. At this time, the purchase psychological process transitions to "Desire". Furthermore, if the customer A recalls a product Y that is a product similar to the product X and that the customer A purchased the other day, and if the customer A compares the product X with the product Y, the purchase psychological process transitions to "Compare". Then, as a result of the comparison, if the customer A is satisfied with the product X and adds the product X to a shopping cart, the purchase psychological process transitions to "Action". The purchase psychological process illustrated in FIG. 15 is only one example; however, in this manner, the customer behaves in accordance with the purchase psychological process as illustrated in FIG. 15, and reaches a certain action before leaving the store. The motion recognition unit 154 adopts a type of the resultant behavior as the first behavior type, identifies a behavior that the customer has performed, and identifies the purchase behavior process corresponding to the resultant behavior.

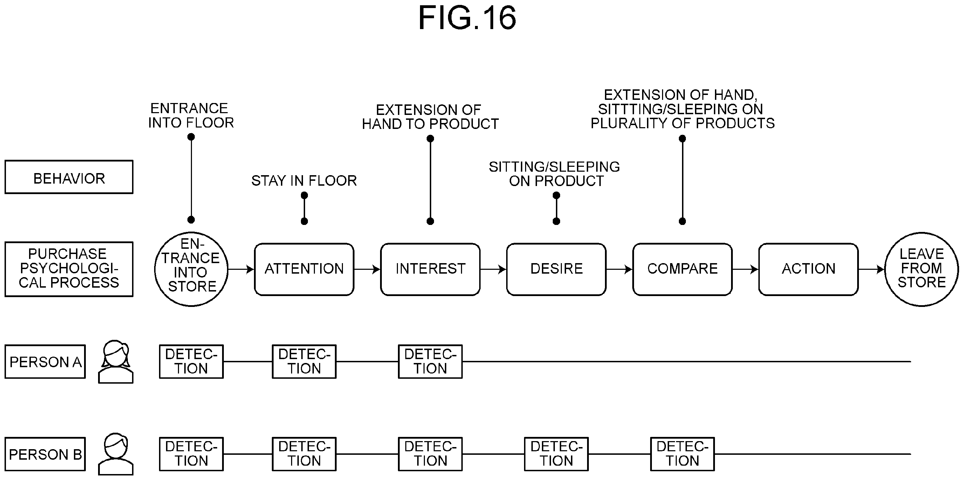

FIG. 16 is a diagram for explaining identification of a resultant behavior type according to the present embodiment. The motion recognition unit 154 detects each of behaviors of the tracked user and identifies a resultant behavior type and the purchase psychological process. The purchase psychological process corresponds to the first behavior type as described above.

In the example illustrated in FIG. 16, it is indicated that the motion recognition unit 154 identifies and detects, with respect to a user A, a behavior of entering into a certain floor, a behavior of staying in the floor for a while, and a behavior of extending a hand to a certain product in the floor. In this case, the resultant behavior type of the user A is, as illustrated in FIG. 16, "extension of hand to a product", and the resultant purchase psychological process is "Interest" corresponding to "extension of hand to a product". Similarly, the resultant behavior type of a user B is, as illustrated in FIG. 16, "extension of hand and sitting and sleeping on a plurality of products", and the resultant purchase psychological process is "Compare". Meanwhile, each of the behavior types corresponding to the purchase psychological process illustrated in FIG. 16 is only one example, and embodiments are not limited to this example.

Specifically, the purchase behavior process transitions to a first behavior process indicating an attention (Attention), a second behavior process indicating an interest (Interest), a third behavior process indicating a desire (Desire), a fourth behavior process indicating comparison (Compare), and a fifth behavior process indicating an action (Action) in this order.

If the user A is in the first behavior process among the plurality of behavior types that define transition of a process of a behavior, the motion recognition unit 154 determines whether the user A performs a behavior (for example, extension of hand to a product) corresponding to the second behavior process to which the first behavior process transitions. If it is determined that the behavior corresponding to the second behavior process is performed, the motion recognition unit 154 determines that the user A has transitioned to the second behavior process. For example, when the user A stays in the floor, the user A is in the state of "Attention". At this time, if "extension of hand to a product" associated with "Interest" that is a transition destination of "Attention" is detected as the behavior of the user A, the state transitions to the state of "Interest".

For example, the motion recognition unit 154 performs the process as described above until the users A and B reach the cashier area 5, and identifies the first behavior type corresponding to each of the users.

Referring back to explanation of FIG. 2, the distribution processing unit 155 determines whether to distribute a coupon to a corresponding use, on the basis of the motion recognition result obtained by the motion recognition unit 154 and the purchase history information associated with the user ID included in the motion recognition result. If the first behavior type of the user is a behavior type with a predetermined level or higher and a product as a target for the first behavior type is not included in the purchase history information, the distribution processing unit 155 distributes a coupon to the user.

Here, it is assumed that the behavior type with the predetermined level or higher is a behavior type corresponding to an interest, a desire, or a comparison. For example, examples of the behavior type with the predetermined level or higher include "not purchased after consideration of whether to purchase a product", "stay in front of a product", and "extend a hand to a plurality of products".

For example, the distribution processing unit 155 performs one of a first purchase history acquisition process and a second purchase history acquisition process, and acquires the purchase history information on the user.

The first purchase history acquisition process will be described below. The distribution processing unit 155 acquires the personal feature information on the target user from the person DB 145 on the basis of the user ID that is set in the motion recognition result. The distribution processing unit 155 identifies a user with personal feature information that is similar to the acquired personal feature information from among users who appear in the second video information in the second video buffer 142. The distribution processing unit 155 identifies a cash register that is located near the identified user in the second video information, and acquires the purchase history information on the user from the identified cash register. Meanwhile, it is assumed that the area of the cash register included in the second video information and identification information on the cash register are set in advance in the storage unit 140.

The second purchase history information acquisition process will be described below. The distribution processing unit 155 acquires the personal feature information on the target user from the person DB 145 on the basis of the user ID that is set in the motion recognition result. The distribution processing unit 155 identifies a user with personal feature information that is similar to the acquired personal feature information from among user who appear in the second video information in the second video buffer 142. After identifying the similar user from among the users who appear in the second video information, the distribution processing unit 155 analyzes a video of a shopping cart that is located near the identified user. The distribution processing unit 155 inputs the video information on the shopping cart of the identified user into a trained learning model that recognizes a product, and identifies identification information on a purchase target product (for example, one or more products). The distribution processing unit 155 generates the identified identification information on the product as the purchase history information.

Here, when distributing a coupon, the distribution processing unit 155 transmits coupon information on the product corresponding to the first behavior type to the cash register that is used by the user, and issues a coupon to the user. For example, the storage unit 140 stores therein coupon information for each product ID, and the distribution processing unit 155 acquires the coupon information on the product corresponding to the first behavior type from the storage unit 140. For example, the distribution processing unit 155 may acquire the purchase history information as described above from the cash register at the time an order confirmation button or the like in the cash register is pressed, and issue a coupon from the cash register at the time a receipt is issued to the user.

Furthermore, the distribution processing unit 155 may distribute information on the coupon in cooperation with an application that is set in a terminal device of the target user. For example, the user inputs application registration information at the time of payment. The application registration information includes an address of a server as a service provider of the application used by the user, the identification information on the user, and the like. The distribution processing unit 155 transmits the identification information on the user and the coupon information on the product to the address that is set in the application registration information, and requests issuance of the coupon.

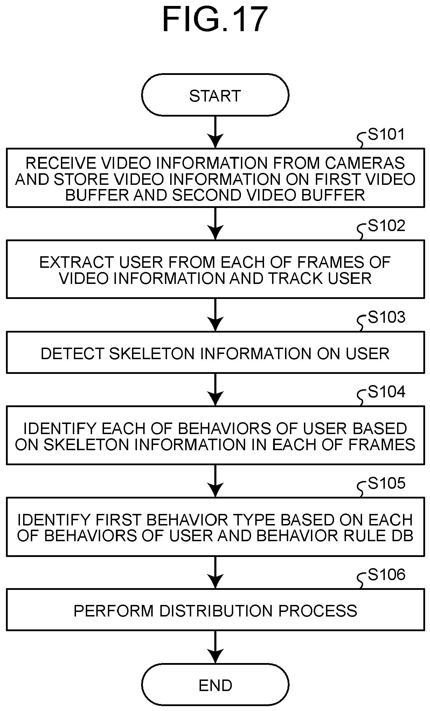

One example of the flow of the process performed by the information processing apparatus according to the present embodiment will be described below. FIG. 17 is a flowchart illustrating the flow of the process performed by the information processing apparatus according to the present embodiment. As illustrated in FIG. 17, the receiving unit 151 of the information processing apparatus 100 receives the video information from the camera 10, the camera 20, and other cameras, and stores the video information in the first video buffer 141 and the second video buffer 142 (Step S101).

The tracking unit 152 of the information processing apparatus 100 extracts a user from each of frames of the video information, and tracks the user (Step S102). The skeleton detection unit 153 of the information processing apparatus 100 detects the skeleton information on the user (Step S103) .

The motion recognition unit 154 of the information processing apparatus 100 identifies each of behaviors of the user on the basis of the skeleton information in each of the frames (Step S104). The motion recognition unit 154 identifies the first behavior type on the basis of each of the behaviors of the user and the behavior rule DB 50 (Step S105).

The distribution processing unit 155 of the information processing apparatus 100 performs the distribution process (Step S106).

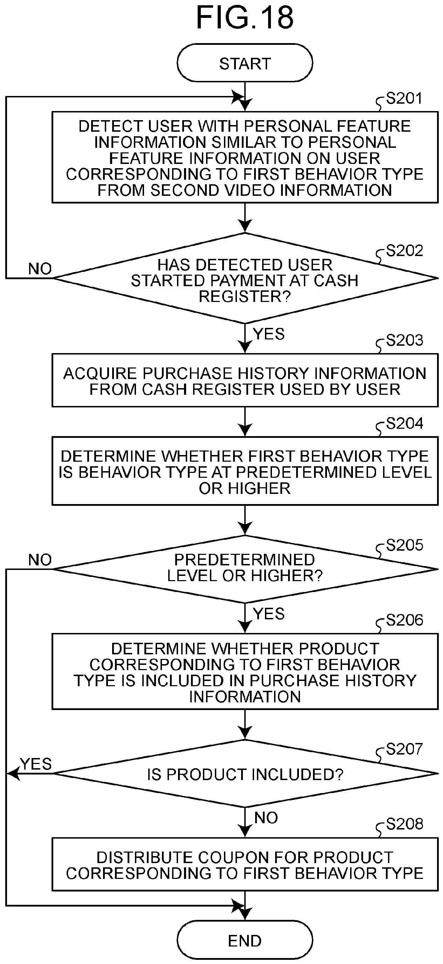

One example of the distribution process described at Step S106 in FIG. 17 will be explained below. FIG. 18 is a flowchart illustrating the flow of the distribution process. As illustrated in FIG. 18, the distribution processing unit 155 of the information processing apparatus 100 detects a user with the personal feature information that is similar to the personal feature information on the user corresponding to the first behavior type from the second video information (Step S201).

If the detected user has not started payment at the cash register (Step S202, No), the distribution processing unit 155 goes to Step S201. In contrast, if the detected user has started payment at the cash register (Step S202, Yes), the distribution processing unit 155 goes to Step S203.

The distribution processing unit 155 acquires the purchase history information from the cash register that is used by the user for the payment (Step S203). The distribution processing unit 155 determines whether the first behavior type is a behavior type with a predetermined level or higher (Step S204).

If the first behavior type is not the behavior type with the predetermined level or higher (Step S205, No), the distribution processing unit 155 terminates the distribution process. If the first behavior type is the behavior type with the predetermined level or higher (Step S205, Yes), the distribution processing unit 155 goes to Step S206.

The distribution processing unit 155 determines whether the product corresponding to the first behavior type is included in the purchase history information (Step S206). If the product corresponding to the first behavior type is included in the purchase history information (Step S207, Yes), the distribution processing unit 155 terminates the distribution process.

If the product corresponding to the first behavior type is not included in the purchase history information (Step S207, No), the distribution processing unit 155 distributes a coupon for the product corresponding to the first behavior type (Step S208). Meanwhile, the information to be distributed is not limited to the coupon for the product corresponding to the first behavior type, but may be an advertisement of the product.

Effects achieved by the information processing apparatus 100 according to the present embodiment will be described below. The information processing apparatus 100 identifies the first behavior type of the user on the basis of the first video information, and distributes a coupon if the first behavior type is the behavior type with the predetermined level or higher and a product corresponding to the first behavior type is not purchased. With this configuration, it is possible to provide a coupon for a product that attracts interest of the user and that is not yet purchased by the user.

The information processing apparatus 100 analyzes the second video information received from the camera 20 installed in the cashier area 5, identifies a product that is purchased by the user, and generates the purchase history information. With this configuration, the information processing apparatus 100 is able to determine whether the product corresponding to the first behavior type has been purchased without receiving the purchase history information from the cash register. Meanwhile, as described above, the information processing apparatus 100 may directly receive the purchase history information from the cash register and perform processes.

The information processing apparatus 100 identifies the personal feature information on the user and the product indicating the first behavior type of the user from the first video information. The information processing apparatus 100 identifies the user with similar personal feature information from the second video information by using the personal feature information on the user identified from the first video information, and identifies a cash register that is used by the identified user for payment. With this configuration, it is possible to issue a coupon for the product indicating the first behavior type from the cash register to the user.

The information processing apparatus 100 assigns the first behavior type to the user on the basis of the behavior rule DB in which a combination of behaviors and a behavior type are associated, so that it is possible to reduce a processing load on the information processing apparatus 100.

Meanwhile, the distribution processing unit 155 as described above may preferentially distribute a coupon for the most expensive product among a plurality of products if a plurality of products correspond to the first behavior type and the plurality of products are not purchased. With this configuration, it is possible to distribute a coupon for a product that efficiently increases sales.

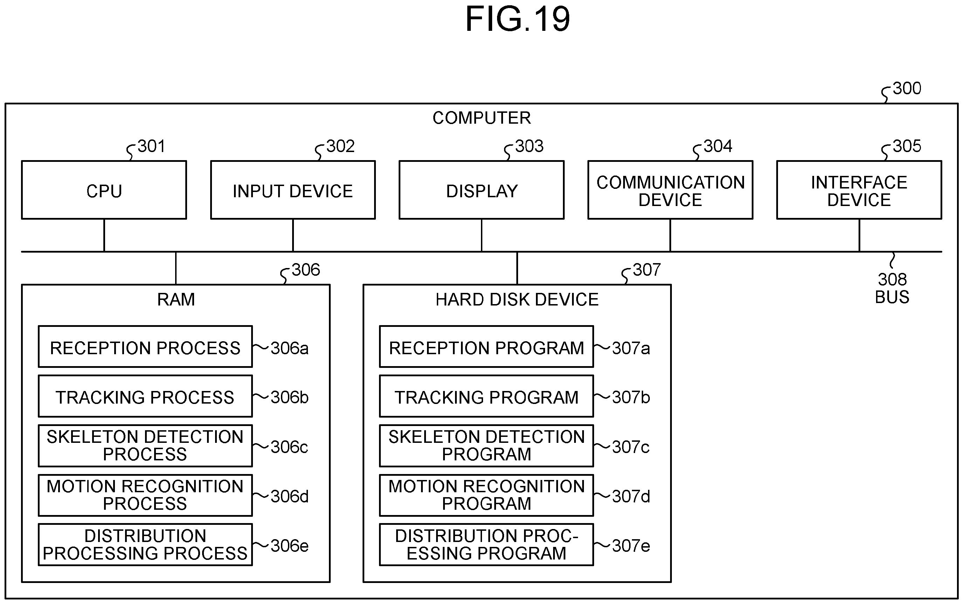

One example of a hardware configuration of a computer that implements the same functions as those of the information processing apparatus 100 of the above-described embodiment will be described below. FIG. 19 is a diagram illustrating an example of the computer that implements the same functions as those of the information processing apparatus according to the present embodiment.

As illustrated in FIG. 19, a computer 300 includes a CPU 301 that performs various kinds of arithmetic processing, an input device 302 that receives input of data from a user, and a display 303. Further, the computer 300 includes a communication device 304 that transmits and receives data to and from an external apparatus or the like via a wired or wireless network, and an interface device 305. Furthermore, the computer 300 includes a random access memory (RAM) 306 for temporarily storing various kinds of information and a hard disk device 307. All of the devices 301 to 307 are connected to a bus 308.

The hard disk device 307 includes a reception program 307a, a tracking program 307b, a skeleton detection program 307c, a motion recognition program 307d, and a distribution processing program 307e. Further, the CPU 301 reads each of the programs 307a to 307e and loads the programs 307a to 307e onto the RAM 306.

The reception program 307a functions as a reception process 306a. The tracking program 307b functions as a tracking process 306b. The skeleton detection program 307c functions as a skeleton detection process 306c. The motion recognition program 307d functions as a motion recognition process 306d. The distribution processing program 307e functions as a distribution processing process 306e.

A process of the reception process 306a corresponds to the process performed by the receiving unit 151. A process of the tracking process 306b corresponds to the process performed by the tracking unit 152. A process of the skeleton detection process 306c corresponds to the process performed by the skeleton detection unit 153. A process of the motion recognition process 306d corresponds to the process performed by the motion recognition unit 154. A process of the distribution processing process 306e corresponds to the process performed by the distribution processing unit 155.

Meanwhile, each of the programs 307a to 307e need not always be stored in the hard disk device 307 from the beginning. For example, each of the programs may be stored in a "portable physical medium", such as a flexible disk (FD), a compact disk-ROM (CD-ROM), a digital versatile disk (DVD), a magneto optical disk, or an integrated circuit (IC) card, which is inserted into the computer 300. Further, the computer 300 may read and execute each of the programs the programs 307a to 307e.

It is possible to provide information on a product that attracts interest of a user and that is not yet purchased.

## Claims

1. A distribution program that causes a computer to execute a process, the process comprising:
extracting a video of a first area in a store, the video including a person and a product;
identifying, by inputting the video of a first area in a store into a trained machine learning model, a behavior that is performed by the person with respect to the product in the store;
identifying a first behavior type that is led by the behavior that is performed by the person with respect to the product among a plurality of behavior types that define transition of a process of the behavior for a product in the store;
identifying a payment machine which the person uses from a video of a second area including the payment machine in the store; and
when the identified first behavior type is at a predetermined level or higher and the product indicating the first behavior type is not included in products registered at the identified payment machine, distributing information corresponding to the product indicating the first behavior type to the identified payment machine.

2. The distribution program according to claim 1, wherein the process further includes
identifying a skeletal position of the person by inputting the video of a first area in a store into the trained machine learning model; and
identifying the behavior that is performed by the person with respect to the product in the store based on the skeletal position relative to a position the product.

3. The distribution program according to claim 1, wherein the process further includes
determining, when the person is in a first behavior process among the plurality of behavior types that define transition of a process of a behavior, whether the person performs a behavior corresponding to a second behavior process to which the first behavior process transitions; and
determining that the person has transitioned to the second behavior process when it is determined that the person has performed the behavior corresponding to the second behavior process.

4. The distribution program according to claim 1, wherein the process further includes
identifying one or more products to be purchased by the person from a video of an area including a payment machine in the store;
determining whether the product indicating the first behavior type is included in the identified products; and
determining distribution of a coupon corresponding to the product indicating the first behavior type when the product indicating the first behavior type is not included in the identified products.

5. The distribution program according to claim 1, wherein the process further includes:
identifying a specific person from among a plurality of persons and a product indicating the first behavior type from a video of an area including a shelf storing a product in the store; and
identifying a payment machine at which the specific person performs payment from among a plurality of payment machines in the video of the area including the payment machine in the store, wherein
the distributing includes outputting one of a coupon and an advertisement for the product indicating the first behavior type from the identified payment machine, based on purchase history information on the identified payment machine.

6. The distribution program according to claim 1, wherein the process further includes:
identifying a specific person from among a plurality of persons and a product indicating the first behavior type from a video of an area including a shelf storing a product in the store; and
identifying a payment machine at which the specific person performs payment from among a plurality of payment machines from the video of the area including the payment machine in the store, wherein
the distributing includes outputting one of a coupon and an advertisement for the product indicating the first behavior type to a terminal that is carried by the specific person, based on purchase history information on the identified payment machine.

7. The distribution program according to claim 1, wherein the process further includes when a plurality of products indicating the first behavior type are present, distributing one of coupons for a plurality of products based on prices of the plurality of products.

8. A distribution method comprising:
extracting a video of a first area in a store, the video including a person and a product;
identifying, by inputting the video of a first area in a store into a trained machine learning model, a behavior that is performed by the person with respect to the product in the store;
identifying a first behavior type that is led by the behavior that is performed by the person with respect to the product among a plurality of behavior types that define transition of a process of the behavior for a product in the store;
identifying a payment machine which the person uses from a video of a second area including the payment machine in the store; and
when the identified first behavior type is at a predetermined level or higher and the product indicating the first behavior type is not included in products registered at the identified payment machine, distributing information corresponding to the product indicating the first behavior type to the identified payment machine.

9. An information processing apparatus comprising:
a control unit (150) configured to
extract a video of a first area in a store, the video including a person and a product;
identify, by inputting the video of a first area in a store into a trained machine learning model, a behavior that is performed by the person with respect to the product in the store;
identify a first behavior type that is led by the behavior that is performed by the person with respect to the product among a plurality of behavior types that define transition of a process of the behavior for a product in the store;
identify a payment machine which the person uses from a video of a second area including the payment machine in the store; and
when the identified first behavior type is at a predetermined level or higher and the product indicating the first behavior type is not included in products registered at the identified payment machine, distribute information corresponding to the product indicating the first behavior type to the identified payment machine.

10. The information processing apparatus according to claim 9, wherein the control unit (150) is further configured to
identify a skeletal position of the person by inputting the video of a first area in a store into the trained machine learning model; and
identify the behavior that is performed by the person with respect to the product in the store based on the skeletal position relative to a position the product.

11. The information processing apparatus according to claim 9, wherein the control unit (150) is further configured to
determine, when the person is in a first behavior process among the plurality of behavior types that define transition of a process of a behavior, whether the person performs a behavior corresponding to a second behavior process to which the first behavior process transitions; and
determine that the person has transitioned to the second behavior process when it is determined that the person has performed the behavior corresponding to the second behavior process.

12. The information processing apparatus according to claim 9, wherein the control unit (150) is further configured to
identify one or more products to be purchased by the person from a video of an area including a payment machine in the store;
determine whether the product indicating the first behavior type is included in the identified products; and
determine distribution of a coupon corresponding to the product indicating the first behavior type when the product indicating the first behavior type is not included in the identified products.

13. The information processing apparatus according to claim 9, wherein the control unit (150) is further configured to:
identify a specific person from among a plurality of persons and a product indicating the first behavior type from a video of an area including a shelf storing a product in the store; and
identify a payment machine at which the specific person performs payment from among a plurality of payment machines in the video of the area including the payment machine in the store;
output one of a coupon and an advertisement for the product indicating the first behavior type from the identified payment machine, based on purchase history information on the identified payment machine.

14. The information processing apparatus according to claim 9, wherein the control unit (150) is further configured to:
identify a specific person from among a plurality of persons and a product indicating the first behavior type from a video of an area including a shelf storing a product in the store; and
identify a payment machine at which the specific person performs payment from among a plurality of payment machines from the video of the area including the payment machine in the store;
output one of a coupon and an advertisement for the product indicating the first behavior type to a terminal that is carried by the specific person, based on purchase history information on the identified payment machine.

15. The information processing apparatus according to claim 9, wherein the control unit (150) is further configured to when a plurality of products indicating the first behavior type are present, distribute one of coupons for a plurality of products based on prices of the plurality of products.
